# FASCICULE DE BREVET EUROPEEN

(11) **EP 3 908 558 B1**
(45) Date de publication et mention de la délivrance du brevet: **20.11.2024**
(21) Numéro de dépôt: 20705412.3
(22) Date de dépôt: 08.01.2020
(51) Int. Cl.: C03C 25/1095, C03C 25/321, C09J 103/02, D04H 1/4218, D04H 1/587, D04H 1/64, D04H 1/4209

(54) **PROCÉDÉ DE FABRICATION D'UN PRODUIT D'ISOLATION À BASE DE LAINE MINÉRALE**
VERFAHREN ZUR HERSTELLUNG EINES ISOLIERPRODUKTES AUF DER BASIS VON STEINWOLLE
METHOD FOR MANUFACTURING AN INSULATION PRODUCT BASED ON MINERAL WOOL

(30) Priorité: 11.01.2019 FR 1900256
(43) Date de publication de la demande: 17.11.2021
(73) Titulaire: SAINT-GOBAIN ISOVER, 92400 Courbevoie (FR)
(72) Inventeur: LEGRAND, Aurélie, 75019 PARIS (FR); OBERT, Edouard, 60700 FLEURINES (FR); TOULEMON, Delphine, 60500 VINEUIL-SAINT-FIRMIN (FR)
(74) Mandataire: Saint-Gobain Recherche
(86) Numéro de dépôt international: PCT/FR2020/050026
(87) Numéro de publication internationale: WO 2020/144436

(56) Documents cités:
- WO-A1-2008/043960
- WO-A1-2015/159012

## Description

La présente invention concerne un procédé de fabrication d'un produit d'isolation à base de fibres, en particulier à base de laine minérale, utilisant une composition de liant contenant un composant glucidique, au moins un acide ou anhydride polycarboxylique monomère et une résine phénolique aminée,
hydrosoluble et stable en milieu acide.

La fabrication de produits d'isolation à base de laine minérale comprend généralement une étape de fabrication des fibres de verre ou de roche par un procédé de centrifugation. Sur leur trajet entre le dispositif de centrifugation et le tapis de collecte des fibres, on vaporise sur les fibres encore chaudes une composition aqueuse d'encollage, également appelée liant, qui subit ensuite une réaction de thermodurcissement à des températures d'environ 200 °C.

Les résines phénoliques utilisées pendant plusieurs dizaines d'années en tant que liants sont remplacées de plus en plus par des produits issus de sources renouvelables et n'émettant pas, ou très peu, de formaldéhyde, composé considéré comme pouvant nuire à la santé humaine.

Il est ainsi connu, par exemple de WO2009/0809038, de lier des fibres minérales avec des compositions aqueuses d'encollage exemptes de formaldéhyde contenant, en tant que réactifs thermoréticulables, des hydrates de carbone et des acides polycarboxyliques.

La demande WO2007/014236 divulgue des liants aqueux, exempts de formaldéhyde, comprenant des réactifs de Maillard à savoir des sucres réducteurs et des composés aminés.

Ces compositions d'encollage à base de sucres réducteurs présentent l'inconvénient de donner lieu à des réactions de coloration (caramélisation, réaction de Maillard) qui rendent difficile, voire impossible, l'obtention de produits de couleur claire.

La Demanderesse a proposé dans ses demandes WO2010/029266 et WO2013/014399 des liants non pas à base de sucres réducteurs, mais à base de sucres hydrogénés, également appelés alcools de sucres. Ces réactifs ont une stabilité thermique considérablement plus élevée que les sucres réducteurs et ne donnent pas lieu aux réactions de Maillard et/ou de caramélisation.

Des liants exempts de formaldéhyde contenant à la fois des sucres hydrogénés et des sucres réducteurs ou non-réducteurs ont été divulgués respectivement dans les demandes WO2013/021112 et WO2015/159012 au nom de la Demanderesse.

Les produits d'isolation à base de laine minérale et de liants à base d'hydrates de carbone (sucres réducteurs, sucres non-réducteurs, sucres hydrogénés), sont toutefois relativement hygroscopiques et conservent moins bien leurs propriétés mécaniques au cours du temps que les produits fabriqués avec des liants phénoliques (résols), notamment à des humidités élevées. Pour compenser la perte des propriétés mécaniques après une certaine période de vieillissement de ces produits d'isolation, il est généralement nécessaire d'augmenter la proportion de liant d'environ 10 à 20 %, ce qui augmente non seulement le coût du produit final mais altère également sa réaction au feu.

La Demanderesse a proposé dans la demande WO2015/132518 d'améliorer la résistance au vieillissement des produits d'isolation de laine minérale liée par des liants à base de sucres hydrogénés, éventuellement en mélange avec des sucres réducteurs, en incorporant des quantités assez importantes d'époxysilanes dans la composition de liant.

Elle a également utilisé avec succès des monoalcools à la fois hydrophobes et hydrosolubles, tels que le phénoxyéthanol, pour réduire la sensibilité à l'humidité de tels produits d'isolation (voir WO2015/181458).

Les époxysilanes et monoalcools hydrophobes utilisés dans ces compositions de liant augmentent toutefois indésirablement le coût de celles-ci.

Au cours de ses recherches visant à trouver encore d'autres solutions, notamment des solutions plus économiques, pour améliorer les propriétés mécaniques et la résistance au vieillissement des produits d'isolation à base de fibres liées par des liants à base d'hydrates de carbone, la Demanderesse a testé des compositions de liant contenant de faibles quantités de résines phénoliques (résols). Ces essais étaient toutefois infructueux car les résines phénoliques usuelles, constituées de condensats phénol/formaldéhyde (résines PF), ou de condensats phénol/formaldéhyde et urée/formaldéhyde (résines PFU), se sont avérées instables. Elles réagissent et précipitent en effet rapidement, même à température ambiante, lorsqu'on les met en contact avec les compositions aqueuses de liant à base de sucres et d'acides polycarboxyliques décrites en introduction (WO2009/0809038, WO2010/029266, WO2013/014399, WO2013/021112, WO2015/159012, WO2015/132518, WO2015/181458). La Demanderesse a attribué cette instabilité des résines PF et PFU au pH acide des compositions de liant.

La présente invention est basée sur la découverte qu'un groupe particulier de résines phénoliques contenant des fonctions amine basiques (protonables) était stable en milieu acide et donc utilisable avec les compositions aqueuses de liant à base d'acides polycarboxyliques et de sucres et/ou de sucres hydrogénés de l'état de la technique. Ces résines phénoliques à fonctions amine sont connues et leur préparation est décrite en détail dans les demandes WO2008/043960 et WO2008/043961 de la Demanderesse.

L'utilisation de ces résines phénoliques aminées dans des compositions de liant acides à base de sucres et d'acides polycarboxyliques a permis d'améliorer les propriétés mécaniques des produits d'isolation obtenus, y compris après vieillissement dans des conditions humides, à condition de ne pas dépasser certaines quantités de résine phénolique.

La présente demande a par conséquent pour premier objet un procédé de fabrication d'un produit isolant à base fibres minérales ou organiques, comprenant
- l'application d'une composition aqueuse de liant sur des fibres minérales ou organiques,
- le chauffage des fibres encollées par la composition aqueuse de liant de manière à évaporer la phase volatile de la composition aqueuse de liant et à réaliser le durcissement thermique du résidu non volatil, ou l'emballage des
fibres minérales ou organiques encollées avec la composition aqueuse de liant en vue du stockage et/ou transport,
la composition aqueuse de liant présentant un pH compris entre 1,0 et 6,5, de préférence entre 1,5 et 5,0, et comprenant :
(a) au moins un glucide choisi parmi les sucres hydrogénés, les sucres réducteurs, les sucres non-réducteurs et les mélanges de ceux-ci,
(b) au moins un acide polycarboxylique monomère ou un anhydride d'un tel acide,
(c) de 1 à 35 % en poids, rapporté au poids total des composants (a), (b), et (c), d'une résine phénolique aminée hydrosoluble constituée essentiellement de condensats phénol-formaldéhyde et de condensats phénol-formaldéhyde-amine.

La présente demande a également pour objet un produit isolant à base de fibres minérales ou organiques obtenu par un tel procédé.

Elle a enfin pour objet une composition aqueuse de liant pour la préparation de produits d'isolation à base de fibres minérales ou organiques, présentant un pH compris entre 1,0 et 6,5, de préférence entre 1,5 et 5,0, et comprenant :
(a) au moins un glucide choisi parmi les sucres hydrogénés, les sucres réducteurs, les sucres non-réducteurs et les mélanges de ceux-ci,
(b) au moins un acide polycarboxylique monomère ou un anhydride d'un tel acide,
(c) de 1 à 35 % en poids, rapporté au poids total des composants (a), (b), et (c), d'une résine phénolique aminée hydrosoluble constituée essentiellement de condensats phénol-formaldéhyde et de condensats phénol-formaldéhyde-amine.

Dans la présente demande les termes « glucide » et « hydrate de carbone » ont un sens plus large qu'usuellement, car ils englobent les oses et osides présentant au moins un groupe aldéhyde ou cétone (groupe réducteur), les sucres non-réducteurs constitués de plusieurs motifs glucidiques dont les carbones porteurs de l'hydroxyle hémi-acétalique sont impliqués dans les liaisons osidiques reliant les motifs entre eux, ainsi que les sucres hydrogénés (également appelés alditols ou alcools de sucres) qui sont les produits d'hydrogénation d'oses ou osides où le groupe aldéhyde ou cétone a été réduit en fonction alcool.

Le composant (a) peut en principe contenir n'importe quel glucide choisi parmi les sucres réducteurs, les sucres non-réducteurs et les sucres hydrogénés et des mélanges de ceux-ci.

Le composant (a) de la composition de liant de la présente invention comprend avantageusement une certaine fraction de sucres hydrogénés. Cette teneur en sucres hydrogénés du glucide (composant (a)) est avantageusement comprise entre 25 et 100 % en poids, de préférence au moins égale à 30 % en poids, en particulier au moins égale à 50 % en poids, et idéalement au moins égale à 70 % en poids, rapporté au poids total du composant glucidique.

Dans un mode de réalisation préféré, le composant (a) est constitué uniquement de sucres hydrogénés et est exempt de sucres réducteurs et non-réducteurs. Ce mode de réalisation est intéressant car il conduit à des produits isolants particulièrement peu colorés.

Par « sucre hydrogéné » on entend l'ensemble des produits résultant de la réduction d'un saccharide choisi parmi les monosaccharides, disaccharides, oligosaccharides et polysaccharides et des mélanges de ces produits. Les sucres hydrogénés sont également appelés alcools de sucres, alditols ou polyols. Ils peuvent être obtenus par hydrogénation catalytique de saccharides. L'hydrogénation peut être effectuée par des méthodes connues opérant dans des conditions de pression d'hydrogène et de température élevées, en présence d'un catalyseur choisi parmi les éléments des groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney.

Le ou les sucres hydrogénés sont choisis avantageusement parmi les produits d'hydrogénation de monosaccharides, disaccharides, oligosaccharides et leur mélanges, de préférence dans le groupe constitué de l'érythritol, l'arabitol, le xylitol, le sorbitol, le mannitol, l'iditol, le maltitol, l'isomaltitol, le lactitol, le cellobitol, le palatinitol, le maltotritol, et les produits d'hydrogénation d'hydrolysats d'amidon ou d'hydrolysats de matières ligno-cellulosiques, notamment d'hémicellulose, en particulier de xylanes et xyloglucanes.

On utilisera de manière particulièrement préférée un sucre hydrogéné choisi dans le groupe formé par le maltitol, le xylitol, le sorbitol et les produits d'hydrogénation d'hydrolysats d'amidon ou de matières ligno-cellulosiques.

Les sucres réducteurs sont de préférence choisis parmi les monosaccharides tels que le glucose, le galactose, le mannose et le fructose, les disacharides tels que le lactose, le maltose, l'isomaltose, le cellobiose et des mélanges de ceux-ci, ainsi que les hydrolysats d'amidon ou de matières lignocellulosiques décrits ci-dessus. On utilisera de préférence le glucose et le fructose et des mélanges de ceux-ci, en particulier le glucose.

Les sucres non-réducteurs sont de préférence les diholosides tels que le tréhalose, les isotréhaloses, le saccharose, les isosaccharoses et des mélanges de ceux-ci. Le saccharose est particulièrement préféré.

Le ou les acides polycarboxyliques utilisés dans la présente invention sont des acides polycarboxyliques monomères. Autrement dit, dans la présente invention ce terme n'englobe pas les polymères obtenus par polymérisation d'acides carboxyliques monomères, tels que les homopolymères ou copolymères d'acide acrylique ou d'acide méthacrylique.

On utilisera de préférence des acides polycarboxyliques choisis dans le groupe constitué des acides dicarboxyliques, acides tricarboxyliques et acides tétracarboxyliques.

Les acides dicarboxyliques sont par exemple choisis dans le groupe formé par l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique. Les acides tricarboxyliques sont par exemple choisis dans le groupe formé par l'acide citrique, l'acide tricarballylique, l'acide 1,2,4-butanetricarboxylique, l'acide aconitique, l'acide hémimellitique, l'acide triméllitique et l'acide trimésique. Les acides tétracarboxyliques sont par exemple l'acide 1,2,3,4-butanetétracarboxylique et l'acide pyroméllitique.

L'acide polycarboxylique particulièrement préféré est l'acide citrique.

La Demanderesse a fait de nombreux essais pour déterminer les proportions respectives des composants (a) et (b) qui aboutissent à des liants qui, à l'état réticulé, confèrent au produit final les meilleures propriétés mécaniques, notamment après vieillissement accéléré dans des conditions humides.

Ces essais ont montré que le rapport en poids glucides/acides polycarboxyliques est avantageusement compris entre 25/75 et 75/25.

Lorsque l'acide polycarboxylique est l'acide citrique, ce rapport est de préférence compris entre 25/75 et 55/45, en particulier entre 30/70 et 50/50.

Dans le domaine technique des résines phénol-formaldéhyde on distingue principalement deux familles, à savoir :
- les résines novolaque préparées en milieu acide et
- les résols obtenus par catalyse basique.

Les résines phénoliques de la présente invention font partie de cette deuxième famille.

Les résines résols sont obtenues en milieu basique par réaction de phénol avec un excès de formaldéhyde, le rapport molaire formaldéhyde/phénol étant typiquement compris entre 2 et 4, chaque molécule de phénol pouvant potentiellement réagir avec trois molécules de formaldéhyde.

Les résines résols contiennent de nombreuses fonctions méthylol portées par un noyau aromatique, qui constituent les sites de réticulation par déshydratation/libération de formol. Ces résines sont essentiellement constituées de condensats phénol/formaldéhyde (PF), de phénol résiduel et de formaldéhyde résiduel. En milieu acide elles réagissent, c'est-à-dire polymérisent, très rapidement à température ambiante et précipitent.

Ces résines de type résols constituées essentiellement de condensats phénol/formaldéhyde (PF) et de phénol et formaldéhyde résiduels peuvent, après neutralisation du catalyseur, être mélangées avec de l'urée qui sert principalement de cosolvant améliorant la diluabilité de la résine et d'agent de piégeage du formaldéhyde résiduel. De tels résols et leur préparation sont décrits en détails dans la demande WO 01/96254. L'ajout d'urée décrit dans cette demande n'améliore toutefois pas sensiblement la stabilité à pH acide des résols et les résines décrites dans cette demande ne sont pas utilisables dans la présente demande.

Les résols aminés (composant (c)) utilisés dans la présente demande sont des résines hydrosolubles stables à pH acide, même à pH très acide compris entre 1 et 2. Cette bonne stabilité est obtenue grâce à une étape réactionnelle supplémentaire qui consiste à faire réagir des résines résols contenant essentiellement des condensats phénol/formaldéhyde, du phénol et du formaldéhyde avec une amine, de préférence une monoalkanolamine, et en particulier la monoéthanolamine.

Cette alkanolamine réagit selon la réaction de Mannich avec les condensats phénol/formaldéhyde (PF), le phénol et le formaldéhyde pour former des condensats phénol/formaldéhyde/amine (PFA). A la fin de la réaction le mélange réactionnel peut être acidifié sans que cela ne provoque la polymérisation à température ambiante. Ces résines résols sont donc considérées comme stables en milieu acide. Leur synthèse est décrite dans les demandes WO2008/043960 et WO2008/043961 de la Demanderesse. Elles se distinguent également par le fait d'être presque exemptes de condensats urée-formaldéhyde qui sont présents uniquement à l'état de traces. Ces condensats urée-formaldéhyde sont présents en quantités importantes dans de nombreuses résines phénoliques de l'état de la technique et présentent une stabilité thermique insuffisante, libérant du formaldéhyde par décomposition thermique.

De manière connue on peut ajouter à la résine résol aminée, après réaction avec la monoalkanolamine, refroidissement du mélange réactionnel et acidification, jusqu'à 25 % en poids, de préférence entre 10 % et 20 % en poids d'urée, ces quantités étant exprimées par rapport au poids sec total de résine résol aminée et d'urée. L'urée sert principalement de cosolvant dans ce type de résine.

Au cours des essais visant à mettre au point des produits d'isolation à base d'ingrédients majoritairement biosourcés, plus résistants au vieillissement, la Demanderesse a constaté qu'il était important d'utiliser une fraction relativement faible de résine phénolique aminée. Un optimum des propriétés mécaniques a été observé pour des fractions de résine phénolique aminée aux environs de 5 à 20 % en poids rapporté au poids total des composants (a), (b) et (c).

La composition aqueuse de liant de la présente invention contient par conséquent entre 1 et 35 % en poids, de préférence de 2 à 30 %, en particulier de 5 à 27 % en poids, et plus préférentiellement de 7 à 20 % en poids, rapporté au poids total des composants (a), (b) et (c), de résine phénolique aminée hydrosoluble constituée essentiellement de condensats phénol-formaldéhyde et de condensats phénol-formaldéhyde-amine. Ces quantités s'entendent comme étant exprimées en matières sèches. Par ailleurs, elles n'englobent pas le poids de l'urée ou d'autres additifs éventuellement ajoutés au mélange de la résine phénolique aminée et de (a) et (b).

La composition aqueuse de liant présente, au moment de son application sur les fibres de laine minérale, un pH compris entre 1,0 et 6,5, de préférence entre 1,5 et 5,0. Ce pH est plus préférentiellement compris entre 1,5 et 4,0, voire même entre 1,7 et 3,0.

La composition aqueuse de liant de la présente invention contient en outre avantageusement entre 0,5 % et 10 % en poids, de préférence entre 1,0 % et 5 % en poids, rapporté au poids total des matières solides de la composition de liant, d'un catalyseur d'estérification, choisi de préférence dans le groupe constitué d'hypophosphite de sodium et d'acide hypophosphoreux.

La composition de liant peut comprendre en outre des additifs connus dans les proportions suivantes calculées sur la base de 100 parts en poids de composant (a) + (b) + (c) :
- de 0 à 5 parts de silane, en particulier d'un époxysilane ou aminosilane (agent de couplage),
- de 0 à 40 parts, de préférence de 4 à 25 parts, d'une huile ou d'une émulsion d'huile (agent anti-poussières),
- de 0 à 5 parts d'un silicone.

La préparation de la composition de liant est effectuée par simple mélange des constituants (composants (a), (b), (c), catalyseur, urée et additifs) avec de l'eau.

Au moment de l'application sur les fibres, la composition de liant a une teneur en matières sèches comprises entre 2 et 15 % en poids, de préférence entre 3 et 10 % en poids.

Elle est appliquée en une quantité telle que la teneur en liant insoluble et infusible du produit final obtenu après durcissement thermique, soit comprise entre 2 % et 20 % en poids, de préférence entre 3 % et 15 % en poids, en particulier entre 4 et 12 % en poids.

Lorsque le produit d'isolation est un produit à base de laine minérale, la composition de liant est projetée par pulvérisation sur les fibres minérales à la sortie du dispositif centrifuge et avant la collecte des fibres minérales sur l'organe récepteur sous la forme d'une nappe de fibres qui est ensuite traitée dans une étuve à une température permettant la réticulation de ingrédients réactifs et la formation d'un liant infusible. Cette étape de réticulation/durcissement thermique se fait par chauffage à une température supérieure ou égale à 180°C, de préférence comprise entre 190 °C et 220 °C, pendant une durée comprise entre 20 secondes et 300 secondes, de préférence entre 30 et 250 secondes.

Lorsque le produit d'isolation est un produit à base de fibres organiques, telles que des fibres d'origine végétales, par exemple des fibres cellulosiques, ou animale, par exemple de la laine, la température de cuisson est généralement inférieure à celle utilisée pour la cuisson de produits à base de fibres minérales afin de préserver les fibres organique d'une éventuelle dégradation thermique. Les températures de cuisson sont par exemple comprises entre 150 et 200 °C. La durée de cuisson est généralement comprise entre plusieurs minutes et plusieurs dizaines de minutes, par exemple entre 5 et 50 minutes, de préférence entre 10 et 30 minutes.

Dans le procédé de la présente invention la cuisson des fibres minérales ou organiques peut se faire immédiatement après application de la composition de liant sur les fibres et collecte des fibres encollées sur un tapis transporteur, par exemple par passage dans une étuve thermostatée à la température de cuisson souhaitée.

Le procédé de la présente demande couvre également un mode de réalisation où le matelas de fibres encollées n'est pas cuit immédiatement mais est conditionné, par exemple partiellement séché, coupé, comprimé, mis en forme et emballé, en vue d'une étape de cuisson séparée de l'étape de fabrication du matelas de fibres encollées. Le matériau d'emballage doit être choisi de manière à permettre le stockage et/ou le transport de ces produits intermédiaires (fibres encollées d'un liant non-durci) en vue d'une étape de procédé supplémentaire, mise en oeuvre ultérieurement ou dans un endroit différent, et comprenant le durcissement thermique du liant, éventuellement après formage du produit intermédiaire, par exemple dans un moule.

### Exemple

On prépare une Composition 1 à 30% d'extrait sec contenant 48 parts en poids de maltitol (composant (a)), 52 parts en poids d'acide citrique (composant (b)), et 5 parts en poids d'hypophosphite de sodium (catalyseur).

On prépare une Composition 2 à 30% d'extrait sec contenant 80 parts de résine phénolique aminée (composant (c)), 20 parts d'urée (cosolvant) et 3 parts de sulfate d'ammonium (catalyseur)

On mélange les Compositions 1 et 2 en des proportions variables de manière à obtenir différents rapports en poids du composant (c) à la somme des composants (a)+(b)+(c).

**[Table 1]**

| Solution d'essai | Parts de composant (c) | Parts d'urée | Parts de composant (a) + composant (b) | (c)/(a)+(b)+(c) |
|---|---|---|---|---|
| Essai 1 selon l'invention | 8 | 2 | 90 | 8,2 % |
| Essai 2 selon l'invention | 16 | 4 | 80 | 16,7 % |
| Essai 3 selon l'invention | 24 | 6 | 70 | 25,5 % |
| Essai 4 comparatif | 40 | 10 | 50 | 44,4 % |
| Essai 5 comparatif | 0 | 0 | 100 | 0 % |

On utilise les solutions des essais 1 - 5 pour déterminer la température de début de réticulation (TR) du liant par analyse mécanique dynamique (DMA). Par ailleurs, on détermine le module de Young et la résistance à la rupture en traction de tissés de fibres de verre liés par les différents liants durcis, avant et après vieillissement accéléré dans des conditions humides.

### Analyse mécanique dynamique :

On dépose à l'aide d'une pipette sur des bandes de filtres en fibres de verre Whatman (grade GF/C ; référence 1822-915) de 60 x 12 mm, superposées deux par deux, 0,4 g des solutions d'essais 1 - 5. L'analyse mécanique dynamique est effectuée sur un appareil de DMA modèle Q800 de TA Instruments muni d'un mors double encastrement. Lors de chaque essai de cuisson on applique une rampe de température avec les paramètres suivants :
- contrainte : 0,1 %
- gradient de température : 25 °C à 250 °C (4 °C par minute)
- fréquence : 1 Hz

La température de début de réticulation est définie comme la température au maximum du facteur de perte tan delta. La précision de la mesure est de ±5°C.

### Détermination du module d'Young et de la résistance en traction

On imprègne des tissés de fibres de verre dans un bain des solutions d'essai 1 - 5, diluées au préalable à 20 % d'extrait sec, de manière à déposer environ 6 % de liant sur les fibres. Les tissés imprégnés sont cuits pendant 120 secondes dans un four ventilé thermostaté à 215 °C.

On découpe pour chaque essai les tissés cuits en dix bandes rectangulaires. La moitié des bandes est soumise à un protocole de vieillissement accéléré dans des conditions humides (3 jours à 35 °C et à une humidité relative de 95 %).

On utilise un banc de traction Série 5960 de Instron, avec une direction de traction à un angle de 45 ° par rapport à la direction de chaîne et de trame.

On mesure le module d'Young avant vieillissement et la résistance à la rupture des joints de liant en traction avant et après vieillissement accéléré. Les résultats, moyennés sur 5 essais, sont présentés dans le tableau 2 ci-dessous.

**[Table 2]**

| Essai | pH | TR (°C) | Module d'Young (MPa) | Résistance traction (N) avant vieillissement | Résistance traction (N) après vieillissement |
|---|---|---|---|---|---|
| 1 (invention) | 1,8 | 140±5 | 5200±315 | 125 ± 4 | 73 ± 3 |
| 2 (invention) | 1,9 | 138±5 | 5280±250 | 122 ± 4 | 72 ± 2 |
| 3 (invention) | 2,0 | n.d. | 5000±900 | 113 ± 5 | 68 ± 2 |
| 4 (comparatif) | 2,1 | 130±5 | 5220±130 | 95 ± 3 | 63 ± 2 |
| 5 (comparatif) | 1,7 | 144±5 | 5190±190 | 116 ± 5 | 63 ± 4 |

On constate que les trois essais selon l'invention (essais 1 - 3) utilisant un liant mixte à base de maltitol (composant (a)), d'acide citrique (composant (b)) et de résine phénolique aminée (composant (c)) en des proportions telles que le composant (c) représente d'environ 8 % à 25 % en poids de la somme des composants (a), (b) et (c) présentent une meilleure résistance à la rupture en traction après vieillissement accéléré qu'un liant à base de maltitol et d'acide citrique uniquement (essai 5) et qu'un liant contenant plus de 40 % en poids de résine phénolique aminée (composant (c)) (essai 4).

## Revendications

1. Procédé de fabrication d'un produit isolant à base de fibres minérales ou organiques, comprenant
- l'application d'une composition aqueuse de liant sur des fibres minérales ou organiques, de préférence des fibres de laine minérale,
- le chauffage des fibres encollées par la composition aqueuse de liant de manière à évaporer la phase volatile de la composition aqueuse de liant et à réaliser le durcissement thermique du résidu non volatil, ou l'emballage des fibres minérales ou organiques encollées avec la composition aqueuse de liant en vue du stockage et/ou transport,
la composition aqueuse de liant présentant un pH compris entre 1,0 et 6,5, de préférence entre 1,5 et 5,0, et comprenant :
(a) au moins un glucide choisi parmi les sucres hydrogénés, les sucres réducteurs, les sucres non-réducteurs et les mélanges de ceux-ci,
(b) au moins un acide polycarboxylique monomère ou un anhydride d'un tel acide,
(c) de 1 à 35 % en poids, rapporté au poids total des composants (a), (b), et (c), d'une résine phénolique aminée hydrosoluble constituée essentiellement de condensats phénol-formaldéhyde et de condensats phénol-formaldéhyde-amine.

2. Procédé selon la revendication 1, **caractérisé par le fait que** la composition aqueuse de liant contient de 2 à 30 %, de préférence de 5 à 27 % en poids, et en particulier de 7 à 20 % en poids, rapporté au poids total des composants (a), (b) et (c), de résine phénolique aminée hydrosoluble constituée essentiellement de condensats phénol-formaldéhyde et de condensats phénol-formaldéhyde-amine.

3. Procédé selon la revendication 1 ou 2, **caractérisé par le fait que** les condensats phénol-formaldéhyde-amine sont des condensats phénol-formaldéhyde-monoalkanolam ine.

4. Procédé selon l'une des revendications précédentes, **caractérisé par le fait que** l'acide polycarboxylique est l'acide citrique.

5. Procédé selon l'une des revendications précédentes, **caractérisé par le fait que** la proportion de sucres hydrogénés dans le glucide (composant (a)) est comprise entre 25 et 100 % en poids.

6. Procédé selon la revendication 5, **caractérisé par le fait que** le glucide (composant (a)) contient au moins 30 % en poids, de préférence au moins 50 % en poids, et en particulier au moins 70 % en poids de sucres hydrogénés.

7. Procédé selon l'une des revendications précédentes, **caractérisée par le fait que** le sucre hydrogéné est choisi parmi les produits d'hydrogénation de monosaccharides, disaccharides, oligosaccharides et leurs mélanges.

8. Procédé selon l'une quelconque des revendications précédentes, **caractérisé par le fait que** le sucre hydrogéné est choisi dans le groupe formé par le maltitol, le xylitol, le sorbitol et les produits d'hydrogénation d'hydrolysats d'amidon ou de matières ligno-cellulosiques.

9. Procédé selon l'une quelconque des revendications précédentes, **caractérisé par le fait que** le rapport en poids du ou des glucides (composant (a)) à l'acide polycarboxylique ((composant (b)) est compris entre 25/75 et 75/25.

10. Procédé selon l'une quelconque des revendications précédentes, **caractérisé par le fait que** la composition de liant présente un pH compris entre 1,5 et 4,0, de préférence entre 1,7 et 3,0.

11. Procédé selon l'une quelconque des revendications précédentes, **caractérisé par le fait que** la composition aqueuse de liant contient en outre entre 0,5 et 10 % en poids, de préférence entre 1,0 et 5 % en poids, rapporté au poids total des matières solides de la composition de liant, d'un catalyseur d'estérification, choisi de préférence dans le groupe constitué d'hypophosphite de sodium et d'acide hypophosphoreux.

12. Composition aqueuse de liant pour la préparation de produits d'isolation à base de fibres organiques ou minérales, présentant un pH compris entre 1,0 et 6,5, de préférence entre 1,5 et 5,0, et comprenant :
(a) au moins un glucide choisi parmi les sucres hydrogénés, les sucres réducteurs, les sucres non-réducteurs et les mélanges de ceux-ci,
(b) au moins un acide polycarboxylique monomère ou un anhydride d'un tel acide,
(c) de 1 à 35 % en poids, rapporté au poids total des composants (a), (b), et (c), d'une résine phénolique aminée hydrosoluble constituée essentiellement de condensats phénol-formaldéhyde et de condensats phénol-formaldéhyde-amine.

13. Produit isolant à base de fibres organiques ou minérales, obtenu par le procédé selon l'une quelconque des revendications 1 à 11.

## Patentansprüche

1. Verfahren zum Herstellen eines Dämmprodukts auf Basis von mineralischen oder organischen Fasern, umfassend
- Aufbringen einer wässrigen Bindemittelzusammensetzung auf mineralische oder organische Fasern, vorzugsweise Mineralwollefasern,
- Erhitzen der durch die wässrige Bindemittelzusammensetzung geschlichteten Fasern, um die flüchtige Phase der wässrigen Bindemittelzusammensetzung zu verdampfen und um die thermische Härtung des nichtflüchtigen Rückstands umzusetzen, oder Verpacken der mit der wässrigen Bindemittelzusammensetzung geschlichteten mineralischen oder organischen Fasern im Hinblick auf Lagerung und/oder Transport,
wobei die wässrige Bindemittelzusammensetzung einen pH-Wert zwischen 1,0 und 6,5, vorzugsweise zwischen 1,5 und 5,0, aufweist und umfasst:
(a) mindestens ein Kohlenhydrat, das aus wasserstoffhaltigen Zuckern, reduzierenden Zuckern, nicht reduzierenden Zuckern und Mischungen davon ausgewählt ist,
(b) mindestens eine monomere Polycarbonsäure oder ein Anhydrid einer solchen Säure,
(c) zu 1 bis 35 Gew.-%, bezogen auf das Gesamtgewicht der Komponenten (a), (b) und (c), ein wasserlösliches Aminophenolharz, das im Wesentlichen aus Phenolformaldehydkondensaten und Phenolformaldehydaminkondensaten besteht.

2. Verfahren nach Anspruch 1, **dadurch gekennzeichnet, dass** die wässrige Bindemittelzusammensetzung zu 2 bis 30 Gew.-%, vorzugsweise zu 5 bis 27 Gew.-% und insbesondere zu 7 bis 20 Gew.-%, bezogen auf das Gesamtgewicht der Komponenten (a), (b) und (c), wasserlösliches Aminophenolharz, das im Wesentlichen aus Phenolformaldehydkondensaten und Phenolformaldehydaminkondensaten besteht.

3. Verfahren nach Anspruch 1 oder 2, **dadurch gekennzeichnet, dass** die Phenolformaldehydam inkondensate Phenolformaldehydmonoalkanolaminkondensate sind.

4. Verfahren nach einem der vorstehenden Ansprüche,
**dadurch gekennzeichnet, dass** die Polycarbonsäure Zitronensäure ist.

5. Verfahren nach einem der vorstehenden Ansprüche,
**dadurch gekennzeichnet, dass** der Anteil an hydrierten Zuckern in dem Kohlenhydrat (Komponente (a)) zwischen 25 und 100 Gew.-% liegt.

6. Verfahren nach Anspruch 5, **dadurch gekennzeichnet, dass** das Kohlenhydrat (Komponente (a)) mindestens zu 30 Gew.-%, vorzugsweise mindestens zu 50 Gew.-% und insbesondere mindestens zu 70 Gew.-%, hydrierte Zucker enthält.

7. Verfahren nach einem der vorstehenden Ansprüche,
**dadurch gekennzeichnet, dass** der hydrierte Zucker aus den Hydrierungsprodukten von Monosacchariden, Disacchariden, Oligosacchariden und Mischungen davon ausgewählt ist.

8. Verfahren nach einem der vorstehenden Ansprüche,
**dadurch gekennzeichnet, dass** der hydrierte Zucker aus der Gruppe ausgewählt ist, die aus Maltitol, Xylitol, Sorbitol und Hydrierungsprodukten von Stärkehydrolysaten oder lignozellulosischen Materialien ausgebildet ist.

9. Verfahren nach einem der vorstehenden Ansprüche,
**dadurch gekennzeichnet, dass** das Gewichtsverhältnis des Kohlenhydrats oder der Kohlenhydrate (Komponente (a)) zu Polycarbonsäure (Komponente (b)) zwischen 25/75 und 75/25 liegt.

10. Verfahren nach einem der vorstehenden Ansprüche,
**dadurch gekennzeichnet, dass** die Bindemittelzusammensetzung einen pH-Wert zwischen 1,5 und 4,0, vorzugsweise zwischen 1,7 und 3,0, aufweist.

11. Verfahren nach einem der vorstehenden Ansprüche,
**dadurch gekennzeichnet, dass** die wässrige Bindemittelzusammensetzung ferner zwischen 0,5 und 10 Gew.-%, vorzugsweise zwischen 1,0 bis 5 Gew.-%, bezogen auf das Gesamtgewicht der festen Materialien der Bindemittelzusammensetzung, einen Veresterungskatalysator enthält, der vorzugsweise aus der Gruppe ausgewählt ist, die aus Natriumhypophosphit und hypophosphoriger Säure besteht.

12. Wässrige Bindemittelzusammensetzung für die Herstellung von Dämmprodukten auf Basis von organischen oder mineralischen Fasern, die einen pH-Wert zwischen 1,0 und 6,5, vorzugsweise zwischen 1,5 und 5,0, aufweisen, und umfassend:
(a) mindestens ein Kohlenhydrat, das aus wasserstoffhaltigen Zuckern, reduzierenden Zuckern, nicht reduzierenden Zuckern und Mischungen davon ausgewählt ist,
(b) mindestens eine monomere Polycarbonsäure oder ein Anhydrid einer solchen Säure,
(C) zu 1 bis 35 Gew.-%, bezogen auf das Gesamtgewicht der Komponenten (a), (b) und (c), ein wasserlösliches Aminophenolharz, das im Wesentlichen aus Phenolformaldehydkondensaten und Phenolformaldehydaminkondensaten besteht.

13. Dämmprodukt auf Basis von organischen oder mineralischen Fasern, das durch das Verfahren nach einem der Ansprüche 1 bis 11 erhalten wird.

## Claims

1. A method for manufacturing an insulating product based on mineral or organic fibers, comprising
- applying an aqueous binder composition to mineral or organic fibers, preferably mineral wool fibers,
- heating the fibers coated with the aqueous binder composition so as to evaporate the volatile phase of the aqueous binder composition and to bring about the thermal curing of the non-volatile residue, or packaging the mineral or organic fibers coated with the aqueous binder composition for the purpose of storage and/or transport,
the aqueous binder composition having a pH of between 1.0 and 6.5, preferably between 1.5 and 5.0, and comprising:
(a) at least one carbohydrate selected from hydrogenated sugars, reducing sugars, non-reducing sugars and mixtures thereof,
(b) at least one monomeric polycarboxylic acid or an anhydride of such an acid,
(c) from 1 to 35% by weight, relative to the total weight of components (a), (b) and (c), of a water-soluble, amine-containing phenolic resin consisting essentially of phenol-formaldehyde condensates and phenol-formaldehyde-amine condensates.

2. The method according to claim 1, **characterized in that** the aqueous binder composition contains from 2 to 30%, preferably from 5 to 27% by weight, and in particular from 7 to 20% by weight, relative to the total weight of components (a), (b) and (c), of water-soluble amine-containing phenolic resin consisting substantially of phenol-formaldehyde condensates and of phenol-formaldehyde-amine condensates.

3. The method according to claim 1 or 2, **characterized in that** the phenol-formaldehyde-amine condensates are phenol-formaldehyde-monoalkanolamine condensates.

4. The method according to one of the preceding claims, **characterized in that** the polycarboxylic acid is citric acid.

5. The method according to one of the preceding claims, **characterized in that** the proportion of hydrogenated sugars in the carbohydrate (component (a)) is between 25 and 100% by weight.

6. The method according to claim 5, **characterized in that** the carbohydrate (component (a)) contains at least 30% by weight, preferably at least 50% by weight, and in particular at least 70% by weight of hydrogenated sugars.

7. The method according to one of the preceding claims, **characterized in that** the hydrogenated sugar is selected from the hydrogenation products of monosaccharides, disaccharides, oligosaccharides and mixtures thereof.

8. The method according to any one of the preceding claims, **characterized in that** the hydrogenated sugar is selected from the group consisting of maltitol, xylitol, sorbitol and the hydrogenation products of starch hydrolysates or lignocellulosic materials.

9. The method according to any one of the preceding claims, **characterized in that** the weight ratio of the carbohydrate(s) (component (a)) to the polycarboxylic acid ((component (b)) is between 25/75 and 75/25.

10. The method according to any one of the preceding claims, **characterized in that** the aqueous binder composition has a pH of between 1.5 and 4.0, preferably between 1.7 and 3.0.

11. The method according to any one of the preceding claims, **characterized in that** the aqueous binder composition further contains between 0.5 and 10% by weight, preferably between 1.0 and 5% by weight, relative to the total weight of solid materials of the binder composition, of an esterification catalyst, preferably selected from the group consisting of sodium hypophosphite and hypophosporous acid.

12. An aqueous binder composition for the preparation of insulating products based on mineral or organic fibers, having a pH of between 1.0 and 6.5, preferably between 1.5 and 5.0, and comprising:
(a) at least one carbohydrate selected from hydrogenated sugars, reducing sugars, non-reducing sugars and mixtures thereof,
(b) at least one monomeric polycarboxylic acid or an anhydride of such an acid,
(c) from 1 to 35% by weight, relative to the total weight of the components (a), (b) and (c), of a water-soluble, amine-containing phenolic resin consisting essentially of phenol-formaldehyde condensates and phenol-formaldehyde-amine condensates.

13. An insulating product based on mineral or organic fibers, obtained by the method according to any one of claims 1 to 11.
